# EUROPÄISCHE PATENTSCHRIFT

(11) **EP 3 663 607 B1**
(45) Veröffentlichungstag und Bekanntmachung des Hinweises auf die Patenterteilung: **08.04.2026**
(21) Anmeldenummer: 19212820.5
(22) Anmeldetag: 02.12.2019
(51) Int. Cl.: F16G 13/06, F16G 13/18, B65G 1/00, F16G 1/08, F16G 5/06, F16G 5/20

(54) **TRANSPORTMITTEL, TRANSPORTSYSTEM UND BEARBEITUNGSMASCHINE**
TRANSPORT MEANS, TRANSPORT SYSTEM AND PROCESSING MACHINE
MOYEN DE TRANSPORT, SYSTÈME DE TRANSPORT ET MACHINE D'USINAGE

(30) Priorität: 04.12.2018 DE 102018130807
(43) Veröffentlichungstag der Anmeldung: 10.06.2020
(73) Patentinhaber: HOMAG GmbH, 72296 Schopfloch (DE)
(72) Erfinder: Rieger, Harald, 72178 Waldachtal (DE)
(74) Vertreter: Hoffmann Eitle

(56) Entgegenhaltungen:
- EP-A1- 0 569 071
- EP-A1- 0 569 071
- EP-A1- 1 066 870
- EP-B1- 0 569 071
- GB-A- 2 225 761

## Beschreibung

### Technisches Gebiet

Die Erfindung betrifft ein Transportmittel, ein Transportsystem, eine Bearbeitungsmaschine und die Verwendung eines Transportmittels. Die Erfindung betrifft weitergehend ein Verfahren zur Identifikation von Verunreinigungen in der direkten Umgebung eines Transportmittels und ein Verfahren zur Anpassung von Strömungseigenschaften eines Transportmittels.

### Stand der Technik

Bearbeitungsmaschinen können ausgebildet sein, verschiedenartige, beispielsweise spanende oder trennende Bearbeitungsoperationen an kontinuierlich zugeführten Werkstücken durchzuführen. Zu diesem Zweck können die zu bearbeitenden Werkstücke unter Verwendung eines oder mehrerer Transportmittel durch den Bearbeitungsbereich einer Bearbeitungsmaschine transportiert werden. Bearbeitungsmaschinen, bei denen die Werkstücke kontinuierlich einen oder mehrere Bearbeitungsbereiche durchlaufen, werden auch als Durchlaufmaschinen bezeichnet.

Ein Transportmittel, das zum Transport der zu bearbeitenden Werkstücke durch den Bearbeitungsbereich einer Durchlaufmaschine eingesetzt werden kann, ist beispielsweise in der EP 2377786 A1 offenbart.

Zum Zweck des Werkstücktransports kann ein Transportmittel Transportstrukturen aufweisen, die während des Transports in direktem Kontakt mit dem zu bearbeitenden Werkstück stehen. Die zum Transport der Werkstücke notwendige Verbindung zwischen dem Transportmittel und dem Werkstück kann beispielsweise durch die aus der Schwerkraft resultierende Haftreibung zwischen Werkstück und Transportstruktur oder durch Mitnehmerelemente erzeugt werden. Zusätzlich können Oberdruckriemen eingesetzt werden. Innerhalb einer Bearbeitungsmaschine ist ein derartiges Transportmittel üblicherweise in einem Transportmittelgehäuse angeordnet. Dieses kann eine Öffnung aufweisen, aus der die Transportstrukturen derart hervorstehen, dass sie mit den zu bearbeitenden Werkstücken zum Zweck des Transports in Kontakt gebracht werden können.

Insbesondere bei spanenden Bearbeitungsoperationen können beispielsweise durch Lücken zwischen den Transportstrukturen und dem Transportmittelgehäuse Verunreinigungen in das Transportmittelgehäuse eindringen und die Funktion des Transportmittels negativ beeinflussen. Insbesondere können Verunreinigungen zu Verschleiß des Transportmittels oder zugehöriger Elemente führen.

Um der Verunreinigung des Transportmittels entgegenzuwirken, wird innerhalb des Transportmittelgehäuses üblicherweise ein Überdruck (gegenüber dem Atmosphärendruck) erzeugt. Zu diesem Zweck können Pumpsysteme, beispielsweise Radialverdichter eingesetzt werden. Derartige Pumpsysteme sind ausgebildet, über ein Leitungssystem Luft in das Transportmittelgehäuse einleiten, sodass diese aus den oben genannten Lücken entweicht. Durch den austretenden Luftstrom wird dem Eintritt von Verunreinigungen in das Transportmittelgehäuse entgegengewirkt. Um diesen Effekt möglichst im gesamten Bereich des Transportmittels zu erzielen, kann das Leitungssystem derart ausgebildet sein, dass die Luft an einer Vielzahl verschiedener Positionen eingeleitet wird.

Unerwünschte Verunreinigungen im Bereich eines Transportmittels können jedoch nicht nur bei Bearbeitungsmaschinen wie den oben beschriebenen Durchlaufmaschinen auftreten. Als weitere Beispiele können auch Antriebsketten von Zweirädern, Raupenbänder von Kettenfahrzeugen oder Förderbänder benannt werden. Um bei derartigen Transportmitteln Verschleiß durch Verunreinigung zu verhindern, kann beispielsweise in regelmäßigen Zeitintervallen eine manuelle Reinigung vorgenommen werden.

Die EP 0 569 071 A1 offenbart eine Förderkette mit gabelartig ausgebildeten Gliedern, deren Öffnung durch eine Platte geschlossen ist. Die Kette weist Rippen (fins) auf, um den Eingriff und die Führung der Kette zu verbessern.

### Darstellung der Erfindung

Aufgabe der Erfindung ist es, eine Möglichkeit zur einfachen, effizienten und kostengünstigen Reduzierung von Verunreinigungen im Bereich eines Transportmittels zur Verfügung zu stellen.

Erfindungsgemäß wird diese Aufgabe durch ein Transportmittel nach Anspruch 1, ein Transportsystem nach einem der Ansprüche 11 oder 12, eine Bearbeitungsmaschine nach Anspruch 13, ein Verfahren nach Anspruch 14 sowie eine Verwendung nach Anspruch 16 gelöst. Bevorzugte Ausgestaltungen sind in den Unteransprüchen angegeben.

Die Kombination eines Transportmittels mit einem Strömungsleitelement ist insofern vorteilhaft, als dass keine externe Strömungsquelle benötigt wird, um ein das Transportmittel umgebendes Fluid derart zu bewegen, dass Verunreinigungen erschwert in den Bereich des Transportmittels eintreten können.

Verunreinigungen können dabei Feststoff- oder Flüssigkeitspartikel verschiedener Größenordnung sein. Als Beispiel können Staub, Späne, Schmiermittel oder Klebstoffe benannt werden.

Das mindestens eine Strömungsleitelement des Transportmittels ist weiterhin derart ausgebildet, dass ein Fluid in der direkten Umgebung des Strömungsleitelements beschleunigt wird, sobald das Strömungsleitelement bewegt wird und dass den aus der Beschleunigung resultierenden Bahnlinien der Fluidelemente gleichzeitig im Wesentlichen eine (Vorzugs-)Orientierung aufgeprägt wird.

Bei dem Fluid in der direkten Umgebung des Strömungsleitelements kann es sich um ein Gas oder um eine Flüssigkeit handeln. Zudem ist auch ein Gemisch aus einem Gas und einer Flüssigkeit, ein Gemisch aus einem Feststoff und einer Flüssigkeit oder ein Gemisch aus einem Feststoff und einem Gas denkbar. Als Beispiele können Luft, Rauch, Dampf, Wasser oder Öl benannt werden.

Die Bewegung des Strömungsleitelements geht mit der Bewegung des Transportmittels einher.

Als direkte Umgebung eines Strömungsleitelements kann ein Raum definiert werden, in dessen Mitte das Strömungsleitelement liegt, und dessen Ausdehnung in alle Raumrichtungen jeweils ein bestimmtes vielfaches, bevorzugt ein Dreifaches der längsten Ausdehnung des Strömungsleitelements nicht überschreitet.

Der Begriff (Vorzugs-) Orientierung bezeichnet einen kontinuierlich zusammenhängenden, jedoch klar begrenzten Bereich von Richtungen. In anderen Worten ist das Strömungsleitelement also derart ausgebildet, dass einem wesentlichem Anteil der Bahnlinien der durch das Strömungsleitelement beschleunigten Fluidelemente Richtungen zugeordnet werden können, die in einem definierten, kontinuierlich zusammenhängenden, jedoch klar begrenztem Bereich von Richtungen liegen.

Es wird darauf hingewiesen, dass nicht alle Fluidelementbahnlinien in der direkten Umgebung des Strömungsleitelements der (Vorzugs-) Orientierung zugeordnet werden müssen. Es ist vielmehr ausreichend, wenn die Richtungen von mindestens 30%, bevorzugt mindestens 60% und besonders bevorzugt mindestens 90% der betreffenden Bahnlinien in den Bereich der (Vorzugs-) Orientierung fallen.

Da Bahnlinien von Fluidelementen insbesondere bei turbulenten Strömungen nicht zwangsweise geradlinig verlaufen, wird die Richtung einer Bahnlinie im Rahmen der vorliegenden Erfindung als geradlinige Verbindung des Anfangs- und Endpunktes der betreffenden Bahnlinie im Bereich der direkten Umgebung des Strömungsleitelements definiert.

Eine (Vorzugs-) Orientierung umfasst sämtliche Richtungen, die gegenüber der Bewegungsrichtung des Strömungsleitelements einen Winkel zwischen 10° und 90°, bevorzugt zwischen 30° und 90° und besonders bevorzugt zwischen 45° und 90° einnehmen.

Das Transportmittel ist ausgebildet, eine Bewegung parallel zu einer Bewegungsbahnkurve auszuführen. Wenn das Transportmittel gegenüber nur einer Biegeachse biegeschlaff ausgeführt ist, liegt diese Bewegungsbahnkurve in einer Bewegungsebene. Die Biegeachse schneidet die Bewegungsebene senkrecht.

Zusätzlich zum oben beschriebenen Richtungsbereich kann die (Vorzugs-) Orientierung in auch der dritten Raumrichtung eingeschränkt werden, beispielsweise mit dem Winkelbereich von -45° bis 45° oder von -30° bis 30° gegenüber der Bewegungsebene des Transportmittels.

Die oben benannten Beispiele bezüglich der (Vorzugs-) Orientierung können mitunter vorteilhaft sein, wenn in den benannten Richtungen in erhöhtem Maß Verunreinigungen vorliegen. Durch das Ausströmen des Fluids in die benannten Richtungen kann dem Eintritt von Verunreinigungen somit gezielt entgegengewirkt werden. Eine derartige Wahl der (Vorzugs-) Orientierung kann weiterhin vorteilhaft sein, wenn das Transportmittel beispielsweise durch ein Transportmittelgehäuse in sämtlichen von der (Vorzugs-) Orientierung abweichenden Richtungen vor dem Eintritt von Verunreinigungen geschützt ist.

Die Richtungen der Bahnlinien der Fluidelemente in der direkten Umgebung eines Strömungsleitelements können beispielsweise anhand einer numerischen Strömungssimulation (CFD-Simulation) oder experimentell in einem Windkanal ermittelt werden.

Der Bewegung eines Fluids liegt meist ein bestimmter Druckverlauf innerhalb des Fluids zugrunde. Aus diesem Grund kann der oben beschriebene Zusammenhang auch derart umschrieben werden, dass das Strömungsleitelement des Transportmittels bevorzugt ausgebildet ist, in einem Fluid in seiner direkten Umgebung einen Druckgradienten in Richtung einer (Vorzugs-) Orientierung zu erzeugen, sobald es bewegt wird.

Auch in diesem Fall bezeichnet die (Vorzugs-) Orientierung einen kontinuierlich zusammenhängenden, jedoch klar begrenzten Bereich von Richtungen. In anderen Worten ist das Strömungsleitelement also bevorzugt derart ausgebildet, dass dem Druckgradienten innerhalb des Fluids in der direkten Umgebung des Strömungsleitelements eine oder mehrere Richtungen zugeordnet werden können, die in einem definierten, kontinuierlich zusammenhängenden, jedoch klar begrenztem Bereich von Richtungen liegen. Eine (Vorzugs-) Orientierung kann beispielsweise sämtliche Richtungen umfassen, die gegenüber der Bewegungsrichtung des Strömungsleitelements einen Winkel zwischen 10° und 90°, bevorzugt zwischen 30° und 90° und besonders bevorzugt zwischen 45° und 90° einnehmen.

Weiterhin kann der oben beschriebene, als (Vorzugs-) Orientierung definierte Richtungsbereich auch derart weiter eingeschränkt werden, dass zudem nur ein Winkelbereich von beispielsweise -45° bis 45°, oder -30° bis 30° gegenüber der Bewegungsebene des Transportmittels eingeschlossen ist.

Das Transportmittel ist bevorzugt als geschlossenes Transportmittel ausgebildet. Daraus resultiert die vorteilhafte Eignung für eine kontinuierliche Bewegung des Transportmittels.

Im Folgenden wird die Beschaffenheit des mindestens einen Strömungsleitelements des Transportmittels präzisiert.

Bevorzugt weist das mindestens eine Strömungsleitelement des Transportmittels eine Form auf, die im Wesentlichen durch Parallelverschiebung eines ebenen Querschnitts gebildet wird, wobei die Parallelverschiebung senkrecht zur Ebene des Querschnitts erfolgt. Jedoch kann das Strömungsleitelement auch eine Form aufweisen, die im Wesentlichen durch Verschiebung eines ebenen Querschnitts gebildet wird, wobei die Verschiebung entlang einer beliebigen Bahn erfolgen kann und wobei der Querschnitt im Verlauf der Verschiebung verändert werden kann. Die Verschiebung entlang einer beliebigen Bahn schließt dabei auch eine Verschiebungsoperation ein, bei der der Querschnitt während des Verschiebens eine Rotation um die betreffende Bahn erfährt. Die geometrische Form, die sich aus den jeweiligen Verschiebungsoperationen ergibt, kann vorteilhaft in Bezug auf die Strömungseigenschaften des Strömungsleitelements sein. Dies ist beispielsweise der Fall, wenn ein Strömungsleitelement, das durch eine der oben benannten Verschiebungsoperationen erzeugt wird, ein Strömungsprofil in Richtung einer (Vorzugs-) Orientierung erzeugt.

Der ebene Querschnitt, auf den die Verschiebungsoperation angewendet wird, weist bevorzugt eine der Formen: Tragflächenform; Rechteckform; Rautenform; Drachenviereckform; Trapezform; Schalenform; Ellipsenform; Kreissegmentform; Kreissektorform; Ringsegmentform; Ogivenform; auf. Die Tragflächenform, auch Tropfenform oder Stromlinienform genannt, weist dabei einen abgerundeten Bereich und einen im Wesentlichen gegenüberliegenden spitzen Bereich auf. Die oben beschriebenen Formen werden aufgrund ihrer besonderen Eignung zur Einflussnahme auf eine Strömungsgeschwindigkeit als Vorteilhaft angesehen. Jedoch wird angemerkt, dass die vorliegende Erfindung nicht auf die benannten Formen beschränkt ist und dass das Strömungsleitelement durch Verschiebung eines beliebigen Querschnitts gebildet werden kann.

Bevorzugt weist der ebene Querschnitt in einer Haupterstreckungsrichtung eine größere Ausdehnung auf, als in einer zweiten, vorzugsweise senkrecht auf der Haupterstreckungsrichtung stehenden Richtung. Querschnitte, die in einer Richtung eine größere Ausdehnung aufweisen, als in einer zweiten Richtung eignen sich in besonderem Maße zum Umlenken einer Strömung. Sie können dementsprechend im Rahmen der vorliegenden Erfindung vorteilhaft eingesetzt werden, um einer Strömung eine (Vorzugs-) Orientierung aufzuprägen.

Nachfolgend wird der Begriff der Haupterstreckungsrichtung definiert. Wenn der ebene Querschnitt einen ersten Punkt und einen zweiten Punkt aufweist, die einen größtmöglichen Abstand zueinander einnehmen, und der ebene Querschnitt zudem keine weiteren Punkte desselben Abstands aufweist, verläuft die Haupterstreckungsrichtung in Richtung der Geraden, die durch den ersten und den zweiten Punkt festgelegt wird. Wenn jedoch mehrere Punkte existieren, die jeweils den gleichen Abstand zueinander einnehmen wie der erste und der zweite Punkt, so wird der ebene Querschnitt einem Rechteck mit geringstmöglichem Flächeninhalt einbeschrieben. Die Haupterstreckungsrichtung verläuft dann parallel zur längeren Rechteckseite. Der letztgenannte Fall tritt beispielsweise ein, wenn der ebene Querschnitt die Form eines gleichschenkligen, spitzwinkligen Dreiecks aufweist.

Das Transportmittel ist ausgebildet, eine Bewegung parallel zu einer Bewegungsbahnkurve auszuführen. Wenn das Transportmittel gegenüber nur einer Biegeachse biegeschlaff ausgeführt ist, liegt diese Bewegungsbahnkurve beispielsweise in einer Bewegungsebene. Jedoch kann das Transportmittel auch gegenüber mehreren Biegeachsen biegeschlaff ausgeführt sein, sodass die Bewegungsbahnkurve dreidimensional im Raum liegen kann. Im Fall eines geschlossenen Transportmittels ist auch die Bewegungsbahnkurve geschlossen. Die Bewegungsbahnkurve kann in anderen Worten durch die Bahn beschrieben werden, die ein Punkt des Transportmittels bei der Bewegung des Transportmittels bei einem vollständigen Umlauf beschreibt.

Bevorzugt ist das Transportmittel derart ausgeführt, dass die Haupterstreckungsrichtung des mindestens einen Strömungsleitelements gegenüber der Tangente der Bewegungsbahnkurve an demjenigen Punkt der Bewegungsbahnkurve, der dem mindestens einen Strömungsleitelement am nächsten liegt, einen Winkel zwischen 0° und 90°, bevorzugt zwischen 10° und 80° und besonders bevorzugt zwischen 45° und 55° einnimmt.

Diese Schrägstellung des Strömungsleitelements gegenüber seiner Bewegungsrichtung kann zur Umlenkung der Strömung eingesetzt werden und somit den Bahnlinien des Fluids bzw. dem Druckgradienten innerhalb des Fluids in der direkten Umgebung des Strömungsleitelements eine (Vorzugs-) Orientierung aufprägen.

Das Transportmittel weist neben dem mindestens einen Strömungsleitelement eine Mehrzahl an Laufrollen, mindestens eine Führungsrolle und eine Mehrzahl an Transportstrukturen zum Transportieren von vorzugsweise plattenförmigen Erzeugnissen auf. Eine Transportstruktur weist dabei eine Transportfläche auf, die ausgebildet ist, mit einem zu transportierenden Werkstück in Kontakt zu treten. Das mindestens eine Strömungsleitelement kann bei einem derartigen Transportmittel beispielsweise an der Transportstruktur oder innerhalb einer Aussparung in der Transportstruktur befestigt sein. Die Befestigung kann kraftschlüssig, beispielsweise durch Einpressen, aber auch formschlüssig sein. Gleichermaßen ist eine einstückige, stoffschlüssige Bauweise der Transportstruktur und des Strömungsleitelements denkbar.

Eine einstückige Bauweise weist gegenüber einer Bauweise mit mehreren Komponenten den Vorteil auf, dass Montageschritte entfallen. Eine integrale Transportstruktur mit Strömungsleitelement kann beispielsweise durch ein additives Fertigungsverfahren hergestellt werden, wobei in diesem Fall beispielsweise auch gleichzeitig komplexe Strömungskanalgeometrien in das Transportmittel eingebracht werden können.

Im Rahmen der Erfindung kann das Transportmittel weiterhin derart ausgebildet sein, dass das mindestens eine Strömungsleitelement gegenüber dem Transportmittel drehbar gelagert ist. Im Fall eines Gliedertransportmittels ist das mindestens eine Strömungsleitelement einem Transportmittelglied zugeordnet und ist bevorzugt gegenüber diesem Transportmittelglied drehbar gelagert. Auf diese Weise kann beispielsweise der Anstellwinkel gegenüber der Bewegungsrichtung verändert werden, sodass die Strömungseigenschaften an die Umgebungsbedingungen angepasst werden. Zudem können ein oder mehrere Arretierelemente vorgesehen werden, sodass das drehbar gelagerte Strömungsleitelement in mehreren Orientierungen festgestellt werden kann.

Eine Anpassung des Anstellwinkels kann mitunter dann vorteilhaft sein, wenn sich die Bewegungsgeschwindigkeit oder die Bewegungsrichtung des Transportmittels ändert. So kann beispielsweise sichergestellt werden, dass den Bahnkurven der Stromlinien in der direkten Umgebung des Strömungsleitelements bei verschiedenen Bewegungsgeschwindigkeiten oder Bewegungsrichtungen die gleiche oder eine ähnliche (Vorzugs-) Orientierung aufgeprägt wird.

Erfindungsgemäß kann das Transportmittel weiterhin mindestens ein Federelement enthalten. Dieses Federelement kann ausgebildet sein, Einfluss auf die Orientierung des drehbar gelagerten Strömungsleitelements zu nehmen. Das Transportmittel mit dem drehbar gelagerten Strömungsleitelement und dem Federelement kann derart ausgebildet sein, dass das Strömungsleitelement abhängig von seiner Bewegungsgeschwindigkeit oder abhängig von der Geschwindigkeit, mit der es angeströmt wird verschiedene Orientierungen relativ zum Transportmittel einnimmt. Bevorzugt nimmt dabei der der Winkel zwischen der Haupterstreckungsrichtung des Strömungsleitelements und der Bewegungsrichtung des Strömungsleitelements mit steigender Geschwindigkeit des Strömungsleitelements ab oder zu. Auf diese Weise kann die (Vorzugs-) Orientierung der Bahnlinien der Fluidelemente bzw. die (Vorzugs-) Orientierung des Druckgradienten in der direkten Umgebung des Strömungsleitelements abhängig von der Geschwindigkeit des Strömungsleitelements gezielt verändert werden. Ein derartiges Transportmittel kann auch als selbstregelnd bezeichnet werden.

Erfindungsgemäß wird auch ein Transportsystem angegeben, das mindestens eines der zuvor beschriebenen Transportmittel mit drehbar gelagertem Strömungsleitelement sowie mindestens einen externen Aktor umfasst. Das Transportsystem ist dabei derart ausgebildet, dass die Orientierung des mindestens einen Strömungsleitelements durch den externen Aktor beeinflusst werden kann. Der externe Aktor kann beispielsweise als Magnet, als Druckluftdüse, als Wärmequelle, als elektrische Spannungsquelle, als Motor oder als Führungskulisse ausgebildet sein.

In letztgenanntem Fall kann die Orientierung des Strömungsleitelements beispielsweise verändert werden, indem ein Abschnitt des Strömungsleitelements während einer Relativbewegung zwischen Strömungsleitelement und Führungskulisse in ein Schienensystem der Führungskulisse eingreift und somit auf eine Bahnkurve gezwungen wird.

Wenn der externe Aktor als Magnet ausgebildet ist, weist das Strömungsleitelement des Transportmittels vorzugsweise einen magnetischen Bereich auf. Wenn der externe Aktor als Wärmequelle ausgebildet ist, besteht das Strömungsleitelement des Transportmittels vorzugsweise zumindest in Teilen aus einem Bimetall, das eingerichtet ist, abhängig von seiner Temperatur verschiedene Formen einzunehmen. Wenn der externe Aktor als Spannungsquelle ausgebildet ist, weist das Strömungsleitelement des Transportmittels vorzugsweise ein Piezoelement auf, das eingerichtet ist, abhängig von einer anliegenden Spannung verschiedene Formen einzunehmen. Ein Vorteil eines derartigen Transportsystems kann beispielsweise darin liegen, dass die Orientierung einer Vielzahl von Strömungsleitelementen eines Transportmittels schnell und automatisiert verändert werden kann.

Erfindungsgemäß wird weiterhin ein Transportsystem angegeben, das mindestens eines der zuvor beschriebenen Transportmittel sowie mindestens eine Transportmittelscheibe aufweist. Die Transportmittelscheibe ist dabei ausgebildet, das mindestens eine Transportmittel anzutreiben und/oder von dem mindestens einen Transportmittel umschlungen zu werden. Der Begriff des Umschlingens schließt dabei auch eine Anordnung ein, bei der ein gerader Abschnitt des Transportmittels tangential zur Transportmittelscheibe verläuft. Das erfindungsgemäße Transportsystem ist dadurch gekennzeichnet, dass die mindestens eine Transportmittelscheibe mindestens eine Aussparung aufweist, die ausgebildet ist, das mindestens eine Strömungsleitelement während des Umschlingens und/oder Antreibens aufzunehmen. Auf diese Weise wird der vorteilhafte Effekt erzielt, dass Kollisionen zwischen dem Transportmittel und dem mindestens einen Strömungsleitelement verhindert werden.

Weitergehend schließt die Erfindung auch eine Bearbeitungsmaschine zur Bearbeitung von bevorzugt plattenförmigen Werkstücken ein, wobei die bevorzugt plattenförmigen Werkstücke vorzugsweise zumindest abschnittsweise aus Holz, holzhaltigem Werkstoff, Verbundwerkstoff oder Kunststoff bestehen. Eine erfindungsgemäße Bearbeitungsmaschine weist eines der zuvor beschriebenen Transportmittel und/oder eines der zuvor beschriebenen Transportsysteme sowie ein Transportmittelgehäuse und eine Filtereinheit auf. Das Transportmittel und/oder das Transportsystem ist in dem Transportmittelgehäuse angeordnet. Die Filtereinheit steht in fluidischer Verbindung mit dem Transportmittelgehäuse. Eine erfindungsgemäße Bearbeitungsmaschine ist dadurch gekennzeichnet, dass das Strömungsleitelement ausgebildet ist, in einem bestimmten Bereich des Transportmittelgehäuses einen Überdruck zu erzeugen. Weitergehend ist das Strömungsleitelement ausgebildet, in anderen Bereichen des Transportmittelgehäuses einen Unterdruck zu erzeugen. Dies ist insbesondere dann vorteilhaft, wenn der Überdruck in demjenigen Bereich des Transportmittelgehäuses erzeugt wird, der einem Bearbeitungsbereich der Bearbeitungsmaschine zugewandt ist. Dadurch wird infolge eines Luftstroms durch Lücken zwischen dem Transportmittel und dem Transportmittelgehäuse dem Eintritt von Verunreinigungen in das Transportmittelgehäuse entgegengewirkt. Durch den Unterdruck hingegen strömt Luft in das Transportmittelgehäuse ein. Bevorzugt strömt Luft durch die Filtereinheit in das Transportmittelgehäuse ein. Besonders bevorzugt strömt Luft ausschließlich durch die Filtereinheit in das Transportmittelgehäuse ein.

Erfindungsgemäß wird weiterhin ein Verfahren zur Identifikation von Verunreinigungen in der Filtereinheit einer zuvor beschriebenen Bearbeitungsmaschine angegeben. Die Bearbeitungsmaschine weist dabei neben den benannten Elementen mindestens einen Messgrößensensor auf, der ausgebildet ist, eine Messgröße in bestimmten Bereichen des Transportmittelgehäuses zu erfassen. Das Verfahren umfasst zumindest die Verfahrensschritte:
- Ermitteln eines Referenzmessgrößenverlaufs in einem Bereich des Transportmittelgehäuses;
- Festlegen zumindest eines Toleranzbands, bevorzugt jedoch eines oberen Toleranzbands und eines unteren Toleranzbands auf der Grundlage des Referenzmessgrößenverlaufs;
- Ermitteln eines Betriebsmessgrößenverlaufs in einem Bereich des Transportmittelgehäuses;
- Vergleichen des Betriebsmessgrößenverlaufs mit den Werten des Toleranzbands oder der Toleranzbänder.

Bevorzugt umfasst das Verfahren weiterhin den Schritt der Ausgabe einer Information bezüglich des Filterzustands mit einer Ausgabeeinheit. Die Information kann beispielsweise "Filter wechseln" / "Filter OK" oder "Verunreinigung" / "Keine Verunreinigung" lauten. Die Informationsausgabe erfolgt zudem auf der Grundlage des Vergleichs des Betriebsmessgrößenverlaufs mit den Werten des Toleranzbands oder der Toleranzbänder.

Ein derartiges Verfahren ist zumindest insofern vorteilhaft, als dass regelmäßige Filterprüfungen und die damit verbundenen Maschinenstillstandszeiten entfallen.

Erfindungsgemäß wird weiterhin ein Verfahren zur Anpassung von Strömungseigenschaften eines Transportmittels einer zuvor beschriebenen Bearbeitungsmaschine angegeben. Die Bearbeitungsmaschine weist neben den benannten Elementen mindestens einen Messgrößensensor auf, der ausgebildet ist, eine Messgröße innerhalb des Transportmittelgehäuses zu messen. Das Verfahren umfasst zumindest die Verfahrensschritte:
- Ermitteln der Messgröße;
- Verändern der Orientierung des mindestens einen Strömungsleitelements auf der Grundlage der gemessenen Messgröße;

Als Messgröße für oben beschriebenes ein Verfahren zur Identifikation von Verunreinigungen in der Filtereinheit und/oder ein oben beschriebenes Verfahren zur Anpassung von Strömungseigenschaften kann beispielsweise eine Strömungsgeschwindigkeit; eine Vibrationsfrequenz; eine Vibrationsamplitude; ein Fluiddruck; ein Schalldruck; eine Temperatur; eine Partikelkonzentration; eine Partikelgröße; benannt werden. Es ist ferner möglich, dass in den beiden benannten Verfahren unterschiedliche Messgrößen verwendet werden.

Durch ein derartiges Verfahren kann beispielsweise sichergestellt werden, dass durchgehend optimale Bedingungen vorliegen, um einer Verunreinigung des Transportmittels und/oder des Transportmittelgehäuses entgegenzuwirken.

Neben den beschriebenen Vorrichtungen und Verfahren wird erfindungsgemäß auch die Verwendung eines zuvor beschriebenen Transportmittels zur Übertragung von Kräften, zum Transport von Werkstücken und zur spanenden Bearbeitung von Werkstücken angegeben.

Die Verwendung zur Übertragung von Kräften betrifft beispielsweise Antriebsketten für Zweiräder. Die Verwendung zur spanenden Bearbeitung von Werkstücken betrifft beispielsweise Ketten für Kettensägen.

Bei den benannten Verwendungen kann zumindest der Vorteil zum Tragen kommen, dass das entsprechende Transportmittel in gewissem Maß gegenüber dem Eintritt von Verunreinigungen geschützt wird.

### Kurze Beschreibung der Figuren

Bevorzugte Ausführungsformen der vorliegenden Erfindung und weitere Ausgestaltungen und Vorteile ergeben sich aus der nachfolgenden Beschreibung der Figuren:
- Fig. 1: zeigt eine erste Ausführungsform eines nicht erfindungsgemäßen Transportmittels in einer perspektivischen Ansicht;
- Fig. 2: zeigt einen Ausschnitt des Transportmittels aus Fig. 1 in vergrößerter Darstellung;
- Fig. 3: zeigt den Ausschnitt des Transportmittels aus Fig. 2 in einer Draufsicht;
- Fig. 4: zeigt eine perspektivische Darstellung eines Ausschnitts einer zweiten Ausführungsform eines nicht erfindungsgemäßen Transportmittels;
- Fig. 5: zeigt den Ausschnitt des Transportmittels aus Fig. 4 in einer Draufsicht;
- Fig. 6: zeigt eine Schnittdarstellung des Transportmittels aus Fig. 3 entlang der Schnittverlaufslinie A-A;
- Fig. 7: zeigt eine Schnittdarstellung des Transportmittels aus Fig. 5 entlang der Schnittverlaufslinie B-B;
- Fig. 8: zeigt eine perspektivische Darstellung einer dritten Ausführungsform eines erfindungsgemäßen Transportmittels;
- Fig. 9: zeigt eine perspektivische Darstellung einer vierten Ausführungsform eines nicht erfindungsgemäßen Transportmittels;
- Fig. 10: zeigt eine perspektivische Darstellung einer bevorzugten Ausführungsform eines nicht erfindungsgemäßen Transportsystems;
- Fig. 11a) bis j): zeigt bevorzugte Querschnitte für ein Strömungsleitelement eines erfindungsgemäßen Transportmittels;
- Fig. 12: zeigt eine bevorzugte Ausführungsform eines erfindungsgemäßen Transportsystems;
- Fig. 13a) bis f): zeigt bevorzugte Formen von Strömungsleitelementen eines erfindungsgemäßen Transportmittels;
- Fig. 14: zeigt eine bevorzugte Ausführungsform eines erfindungsgemäßen Verfahrens zur Identifikation von Verunreinigungen in der Filtereinheit einer Bearbeitungsmaschine;

### Ausführliche Beschreibung bevorzugter Ausführungsformen

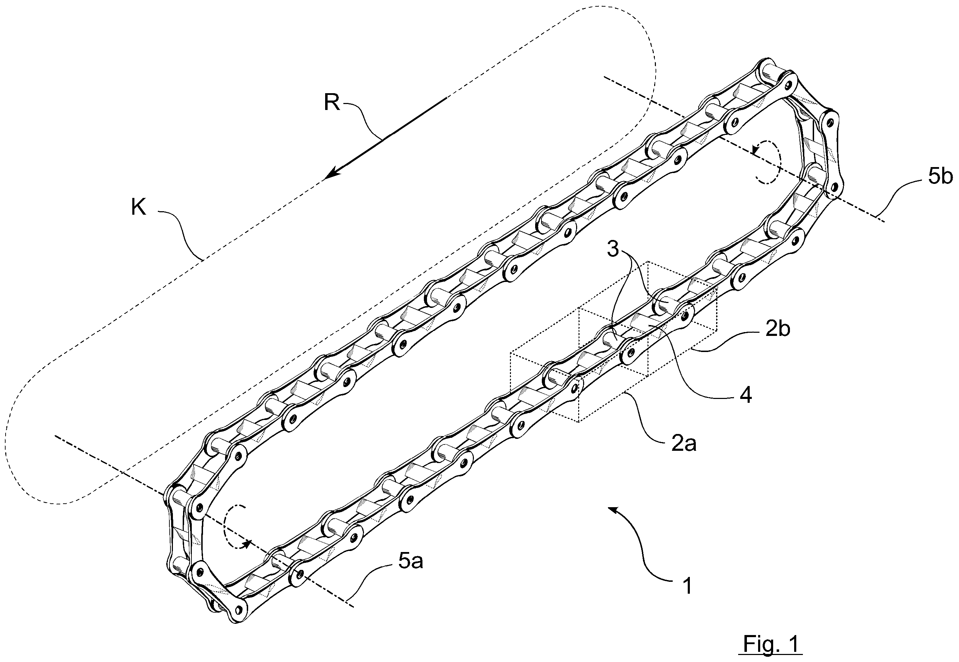

in Fig. 1 ist eine erste Ausführungsform eines nicht erfindungsgemäßen Transportmittels 1 in einer perspektivischen Ansicht dargestellt. Das Transportmittel ist als Gliedertransportmittel ausgebildet und weist jeweils abwechselnd aneinandergereihte Transportmittelglieder 2a und 2b auf. Jedes der Transportmittelglieder enthält zudem ein Strömungsleitelement 4. Sämtliche Transportmittelglieder 2a sind jeweils an zwei Enden mit Transportmittelgliedern 2b verbunden. Sämtliche Transportmittelglieder 2a, 2b bilden zusammen ein geschlossenes Transportmittel. Mithilfe der Gelenke 3 können je zwei verbundene Transportmittelglieder 2a und 2b um eine Biegeachse rotatorisch zueinander bewegt werden. Wie in Fig. 1 dargestellt, kann das geschlossene Transportmittel gerade und gekrümmte Bereichen aufweisen. Die gekrümmten Bereiche sind im vorliegenden Beispiel um eine erste Umlenkachse 5a und eine zweite Umlenkachse 5b gekrümmt, jedoch ist auch eine Aneinanderreihung einer Vielzahl gerader, konkav und konvex gekrümmter Bereiche möglich. Das Transportmittel 1 ist ausgebildet, eine Bewegung parallel zu einer Bewegungsbahnkurve K auszuführen. Ein unvollständiger Teil der Bewegungsbahnkurve K ist in Fig. 1 mit R bezeichnet. Jedes der Zugmitglieder 2a, 2b weist ein Strömungsleitelement auf, das gebildet werden kann, indem ein ebener Querschnitt senkrecht zur Ebene des Querschnitts parallel verschoben wird. Im vorliegenden Fall weist der ebene Querschnitt eine Form auf, die als Tragflächenformen, Stromlinienform oder Tropfenform bezeichnet werden kann.

Anders als in Fig. 1 dargestellt kann beispielsweise auch jedes zweite, jedes dritte oder jedes n-te Transportmittelglied ein Strömungsleitelement aufweisen.

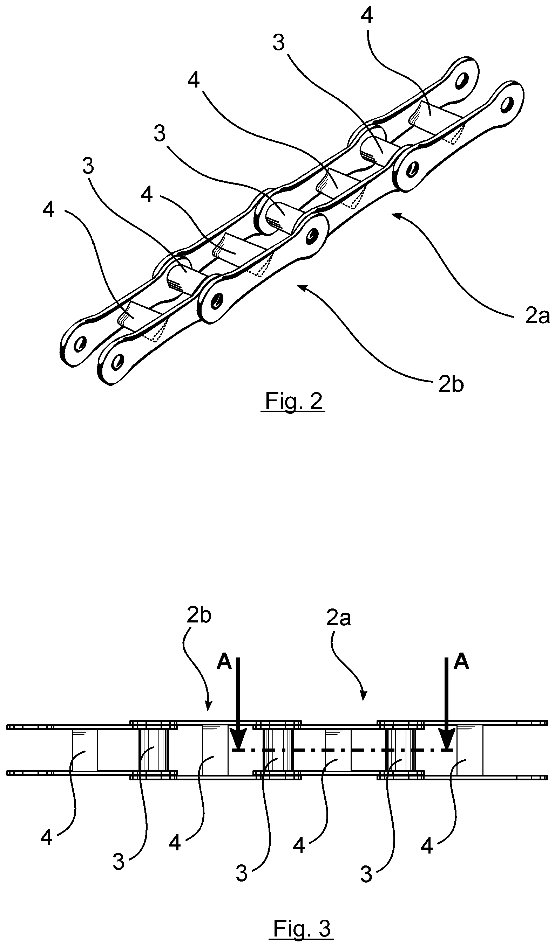

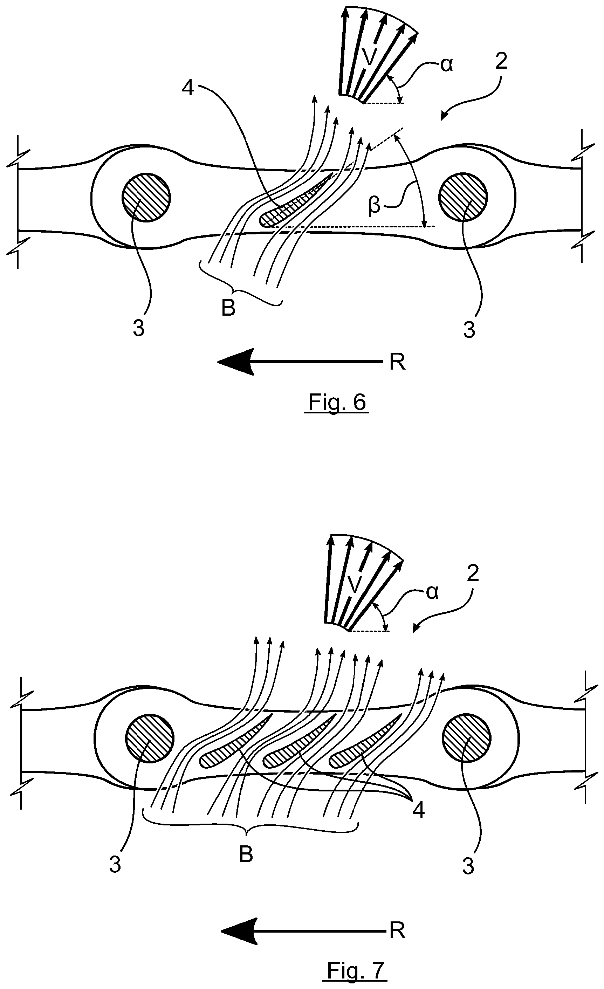

In Fig. 2 ist eine vergrößerte Darstellung eines Ausschnitts des Transportmittels aus Fig. 1 abgebildet. Fig. 3 zeigt eine Draufsicht des in Fig. 2 perspektivisch dargestellten Ausschnitts der ersten Ausführungsform eines nicht erfindungsgemäßen Transportmittels. In Fig. 3 ist zudem die Schnittverlaufslinie A-A eingetragen, die der Schnittdarstellung in Fig. 6 zugeordnet werden kann.

Aus der Schnittdarstellung in Fig. 6 geht hervor, dass die Haupterstreckungsrichtung des Strömungsleitelements gegenüber der Bewegungsbahnkurve K, bzw. gegenüber einem Teil R der Bewegungsbahnkurve K einen Winkel β von etwa 45° einnimmt. Insbesondere diese Schrägstellung führt dazu, dass die Fluidelemente in der direkten Umgebung des Strömungsleitelements beschleunigt werden, sobald das Strömungsleitelement zusammen mit dem Transportmittel parallel zur Bewegungsbahnkurve K bewegt wird. Eine aus der Beschleunigung resultierende Fluidelement-Bahnliniengruppe B und eine (Vorzugs-) Orientierung V in Form eines zweidimensionalen Richtungsbereichs sind ebenfalls in Fig. 6 dargestellt. Es wird deutlich, dass die Richtungen der Bahnlinien in den Bereich der (Vorzugs-) Orientierung V fallen. Die (Vorzugs-) Orientierung V weist gegenüber der Bewegungsrichtung R des Strömungsleitelements 4 einen Winkel α auf.

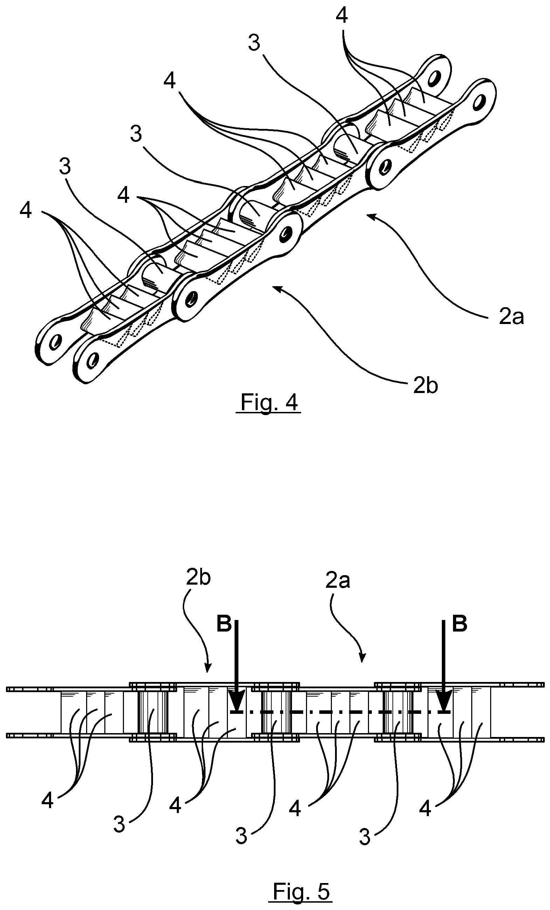

In den Figuren 4, 5 und 7 ist eine zweite Ausführungsform eines nicht erfindungsgemäßen Transportmittels 1 dargestellt.

Die zweite Ausführungsform unterscheidet sich von der ersten Ausführungsform dahingehend, dass jedes Transportmittelglied 2a, 2b drei Strömungsleitelemente 4 aufweist. Die Form und die Orientierung der Strömungsleitelemente 4 entsprechen hingegen der Form und der Orientierung des Strömungsleitelements 4 der zuvor beschriebenen ersten Ausführungsform. Dadurch, dass einem Transportmittelglied 2a, 2b mehrere Strömungsleitelemente zugeordnet werden, kann der Betrag des erzeugten Druckgradienten und/oder des Volumenstroms des in Vorzugsrichtung V geleiteten Fluids gegenüber der in den Figuren 1,2,3 und 6 dargestellten ersten Ausführungsform erhöht werden.

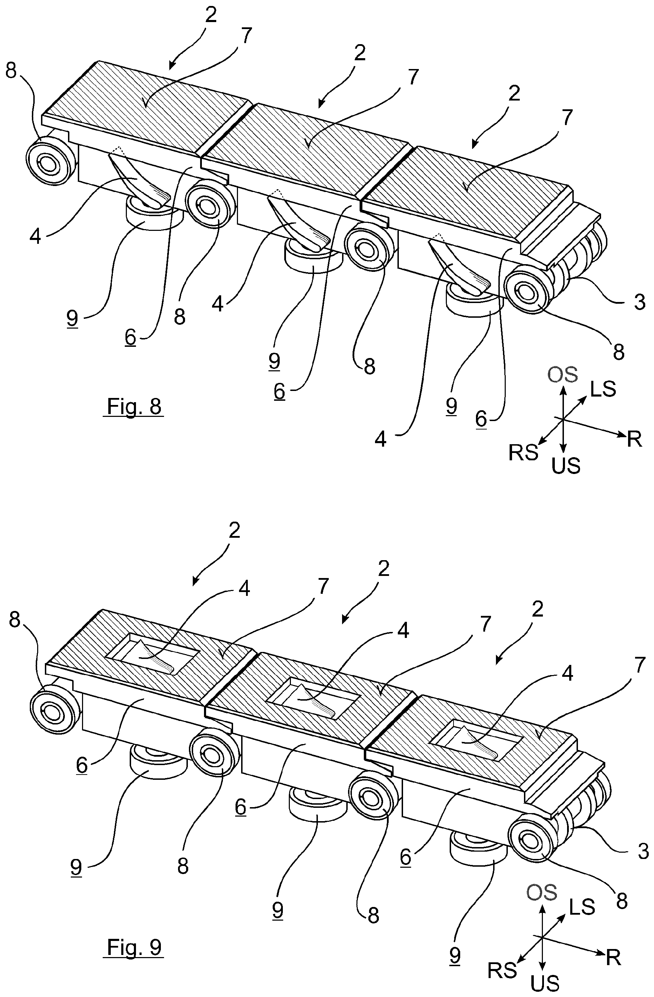

In Fig. 8 sind drei Transportmittelglieder 2 einer dritten Ausführungsform eines erfindungsgemäßen Transportmittels dargestellt. Zudem zeigt Fig. 8 einen Teil der Bewegungsbahnkurve R, die Richtung einer rechten Seite RS, die Richtung einer linken Seite LS, die Richtung einer Oberseite OS und die Richtung einer Unterseite US der dargestellten Transportmittelglieder 2. Jedes Transportmittelglied 2 dieser Ausführungsform weist an seiner linken Seite LS und an seiner rechten Seite RS Laufrollen 8 und Strömungsleitelemente 4, an seiner Unterseite US eine Führungsrolle 9 und an seiner Oberseite OS eine Transportstruktur 6 mit einer Transportfläche 7 auf. Die Transportstruktur 6 ist ausgebildet, mit einem Werkstück in Kontakt zu treten. Die Laufrollen 8 sind ausgebildet, auf dafür vorgesehenen Laufflächen (nicht dargestellt) abzurollen und Kräfte auf diese Laufflächen zu übertragen, die beispielsweise von einem Werkstück (ebenfalls nicht dargestellt) über die Transportebene 7 der Transportstruktur 6 in das Transportmittel eingeleitet werden. Die Führungsrollen 9 sind ausgebildet, zumindest einseitig in Kontakt mit einer Führungsschiene (nicht dargestellt) zu treten und stellen somit sicher, dass die Transportmittelglieder ihre Bahn nicht in Richtung der linken Seite LS oder der rechten Seite RS verlassen. Die Strömungsleitelemente 4 weisen eine Form auf, die durch Parallelverschiebung eines ebenen, tragflächenförmigen Querschnitts gebildet werden kann. Die Haupterstreckungsrichtung der Strömungsleitelemente ist derart orientiert, dass ein Fluid in der direkten Umgebung des Strömungsleitelements 4 bei einer Bewegung des Transportmittels entlang der Bewegungsbahnkurve K (bzw. des Teils R) im Wesentlichen in Richtung der Oberseite OS beschleunigt wird. Wenn Teile der Unterseite US, der rechten Seite RS und der linken Seite LS des Transportmittels von einem Transportmittelgehäuse (nicht dargestellt) umgeben sind, kann das durch die Strömungsleitelemente 4 beschleunigte Fluid beispielsweise durch Lücken zwischen den Transportstrukturen 6 und dem Transportmittelgehäuse in Richtung der Oberseite OS, in Richtung der linken Seite LS oder in Richtung der rechten Seite RS entweichen. Auf diese Weise wirkt es dem Eintritt von Verunreinigungen in das Transportmittelgehäuse (nicht dargestellt) entgegen.

Eine vierte Ausführungsform eines nicht erfindungsgemäßen Transportmittels ist ausschnittsweise in Fig. 9 dargestellt. Die vierte Ausführungsform entspricht im Wesentlichen der in Fig. 8 dargestellten dritten Ausführungsform, jedoch sind die Strömungsleitelemente 4 nicht seitlich an den Transportmittelgliedern 2, sondern jeweils innerhalb der Transportstrukturen 6 angeordnet. Die Transportstrukturen 6 bzw. die Transportebenen 7 weisen Öffnungen auf, durch die ein Fluid ein- oder ausströmen kann. Die Transportmittelglieder 2 sind dabei derart ausgebildet, dass jede Öffnung mit der Unterseite US des zugehörigen Transportmittelglieds 2 in fluidischer Verbindung steht.

Nicht dargestellt ist eine fünfte Ausführungsform, bei der die Strömungsleitelemente 4 sowohl seitlich an den Transportmittelgliedern 2 als auch innerhalb der Transportstrukturen 6 angeordnet sind.

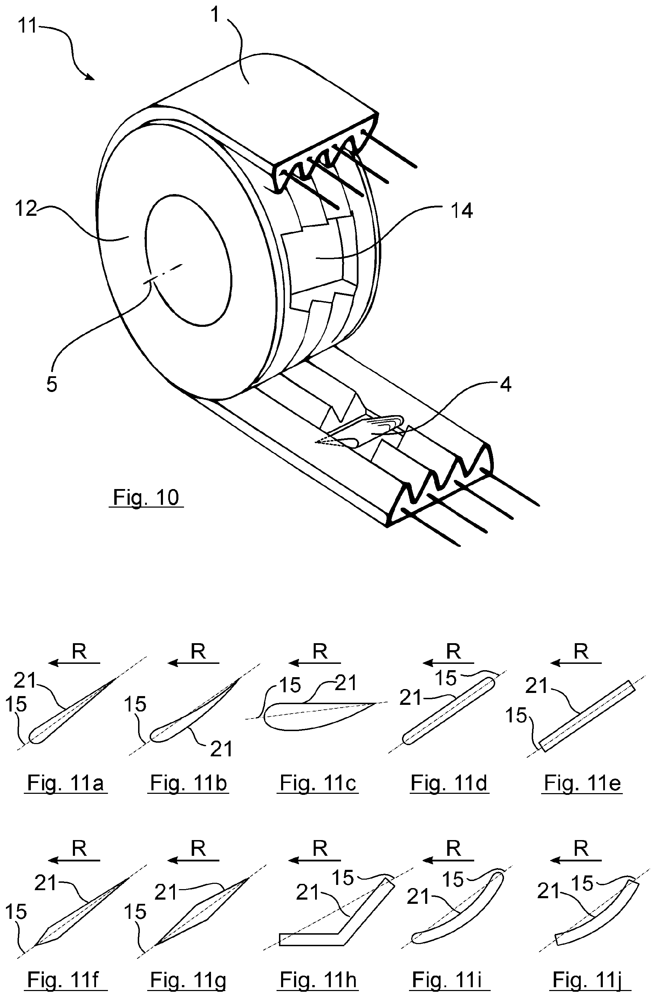

In Fig. 10 ist eine bevorzugte Ausführungsform eines nicht erfindungsgemäßen Transportsystems dargestellt. Das Transportsystem weist ein als Riemen ausgebildetes Transportmittel 1 sowie eine Transportmittelscheibe 12 auf, die vom Transportmittel 1 umschlungen wird. Das Transportmittel 1 weist mindestens ein Strömungsleitelement 4 auf, das im vorliegenden Fall stoffschlüssig mit dem Transportmittel verbunden ist. Die Transportmittelscheibe 12 ist ausgebildet, um eine Umlenkachse 5 zu rotieren. Weitergehend weist die Transportmittelscheibe 12 mindestens eine Aussparung 14 auf, die ausgebildet ist, das mindestens eine Strömungsleitelement 4 während des Umschlingens und/oder Antreibens aufzunehmen. Auf diese Weise werden Kollisionen während des Umschlingens vermieden.

In den Figuren 11a bis 11j sind bevorzugte Querschnitte 21 des Strömungsleitelements 4 zusammen mit den zugeordneten Haupterstreckungsrichtungen 15 und jeweils einem Teil der Bewegungsbahnkurve R dargestellt. Die Figuren 11a bis 11c zeigen verschiedene Varianten der Tragflächenform, auch Stromlinienform oder Tropfenform genannt. Diese Form zeichnet sich insbesondere durch ihren geringen Strömungswiderstand aus und erzeugt zudem ein vergleichsweise homogenes und gerichtetes Strömungsprofil. Die Figuren 11d und 11e zeigen eine (abgerundete) Rechteckform, Fig. 11f zeigt eine Drachenviereckform und Fig. 11g zeigt eine Rautenform. In Fig. 11h ist eine Knickform dargestellt, die Figuren 11i und 11j zeigen eine (abgerundete) Ringsegmentform. Die in den Figuren 11h bis 11j dargestellten Formen können aufgrund ihrer konvexen Kontur auch als Varianten der Schalenform bezeichnet werden. Sämtlichen in den Figuren 11a bis 11j dargestellten Formen ist gemein, dass ihre Haupterstreckungsrichtung 15 gegenüber dem nächstliegenden Teil der Bewegungsbahnkurve R einen spitzen Winkel β einnimmt.

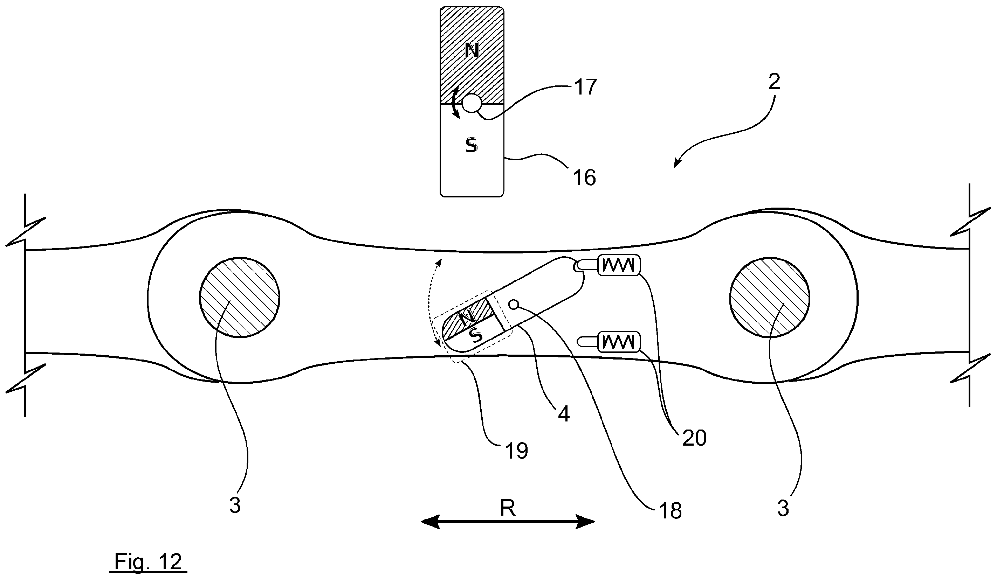

In Fig. 12 ist ein exemplarischer Ausschnitt einer bevorzugten Ausführungsform eines weiteren erfindungsgemäßen Transportsystems dargestellt. Das Transportsystem umfasst ein Transportmittel, das zumindest ein drehbar an einem Strömungsleitelement-Gelenk 18 gelagertes Strömungsleitelement 4 und zumindest zwei Arretierelemente 20 aufweist. Das Transportmittel ist als Gliedertransportmittel ausgebildet, wobei die Transportmittelglieder 2 jeweils mit Gelenken 3 miteinander verbunden sind. Das dargestellte Strömungsleitelement 4 weist einen magnetischen Abschnitt 19 auf. Weiterhin umfasst das Transportsystem zumindest einen externen Aktor, ausgebildet als Stellmagnet 16. Der Stellmagnet 16 ist drehbar um ein Stellmagnetgelenk 17 gelagert, sodass dem Transportmittel unter anderem der Nordpol N oder der Südpol S des Stellmagneten 16 zugewandt sein kann. Ebenfalls in Fig. 12 dargestellt ist ein Teil der Bewegungsbahnkurve R des Transportmittels. In Fig. 12 ist ein Zustand dargestellt, bei dem der magnetische Abschnitt 19 des Strömungsleitelements 4 vom Stellmagneten 16 abgewandt ist. Das Strömungsleitelement 4 wird zudem durch ein Arretierelement 20 in der benannten Position gehalten. Das Arretierelement ist ausgebildet, die Position freizugeben, sobald eine bestimmte Kraft in Drehrichtung des Strömungsleitelements 4 überschritten wird. Da der Südpol S des Stellmagneten und der Nordpol N des magnetischen Abschnitts 19 des Strömungsleitelements 4 einander zugewandt sind, ändert sich der Zustand des Transportsystems im nächsten (nicht dargestellten) Schritt dahingehend, dass sich der magnetische Bereich 19 des Strömungsleitelements 4 auf den Stellmagneten 16 zubewegt. Während der damit verbundenen Drehbewegung löst sich das Strömungsleitelement aus dem Arretierelement 20 und rastet nach dem Abschluss der Bewegung in einem anderen Arretierelement 20 ein. Auf diese Weise kann die Orientierung der Haupterstreckungsrichtung des Strömungsleitelements 4 allein dadurch verändert werden, dass das betreffende Transportmittelglied 2 an dem Stellmagneten 17 vorbeibewegt wird. Die Veränderung der Orientierung der Haupterstreckungsrichtung des Strömungsleitelements 4 ist reversibel. Mit einem derartigen Transportsystem kann die Orientierung der Haupterstreckungsrichtung einer sehr großen Zahl an Strömungsleitelementen effizient verändert werden. Im dargestellten Fall wird dieser Effekt genutzt, um auch bei einem Wechsel der Bewegungsrichtung des Transportmittels sicherzustellen, dass die Richtungen der Bahnlinien der Fluidelemente derselben (Vorzugs-) Orientierung V zugeordnet werden.

In den Ausführungsformen der Figs. 1 bis 9 und in Fig. 12 ist das Strömungsleitelement 4 zwischen den jeweiligen Gelenken 3 angeordnet. Vielmehr kann das Strömungsleitelement 4 an einer beliebigen Position des Transportmittels und somit auch im Bereich eines Gelenks 3 angeordnet sein.

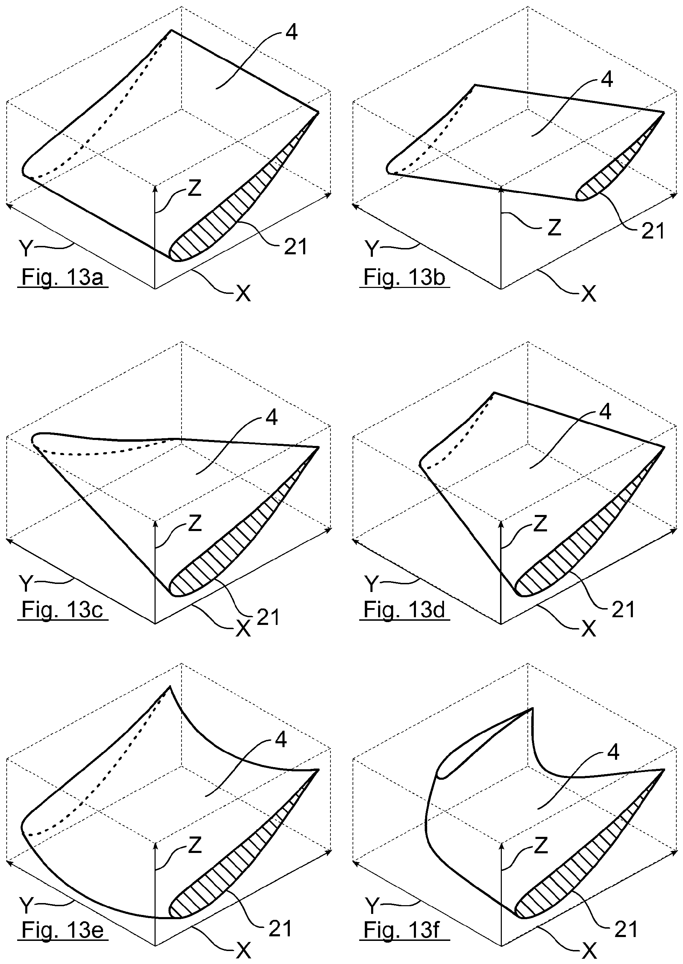

In den Figuren 13a bis 13f sind bevorzugte Ausführungsformen eines Strömungsleitelements 4 dargestellt. Zur Visualisierung ist jede Ausführungsform des Strömungsleitelements 4 einem Quader einbeschrieben. Jeweils drei Quaderseiten liegen dabei in den Koordinatenebenen eines kartesischen Koordinatensystems mit den orthogonal zueinander orientierten Achsen X, Y und Z. Sämtliche in den Figuren 13a bis 13f dargestellte Ausführungsformen entstehen im Wesentlichen durch Verschiebung eines ebenen Querschnitts 21. Der ebene Querschnitt 21 liegt in sämtlichen dargestellten Ausführungsformen in der XZ-Ebene des kartesischen Koordinatensystems. Die Form des Strömungsleitelements 4 in Fig. 13a entsteht durch Parallelverschiebung des ebenen Querschnitts 21 senkrecht zur XZ-Fläche. Die Form des Strömungsleitelements 4 in Fig. 13b entsteht durch Parallelverschiebung des ebenen Querschnitts 21 entlang einer Bahn, die nicht senkrecht zur der XZ-Ebene verläuft. Die Form des Strömungsleitelements 4 in Fig. 13c entsteht durch Parallelverschiebung des ebenen Querschnitts 21 senkrecht zur XZ-Ebene, wobei der Querschnitt während der Parallelverschiebung eine Rotation um die Verschiebungsbahn erfährt. Die Form des Strömungsleitelements 4 in Fig. 13d entsteht durch Parallelverschiebung des ebenen Querschnitts 21 senkrecht zur XZ-Fläche, wobei sich der Querschnitt während der Parallelverschiebung verändert. Die Form des Strömungsleitelements 4 in Fig. 13e entsteht durch Parallelverschiebung des ebenen Querschnitts 21 entlang einer gekrümmten Bahn. Die Form des Strömungsleitelements 4 in Fig. 13f entsteht durch die Verschiebung des ebenen Querschnitts 21 entlang einer beliebigen Bahn, wobei sich der Querschnitt während der Verschiebung verändert. Konkret beginnt die Verschiebung im Wesentlichen senkrecht zur XZ-Ebene und erfährt sodann eine Umlenkung um etwa 90°, sodass der Querschnitt im weiteren Verlauf im Wesentlichen parallel zur XY-Ebene bewegt wird.

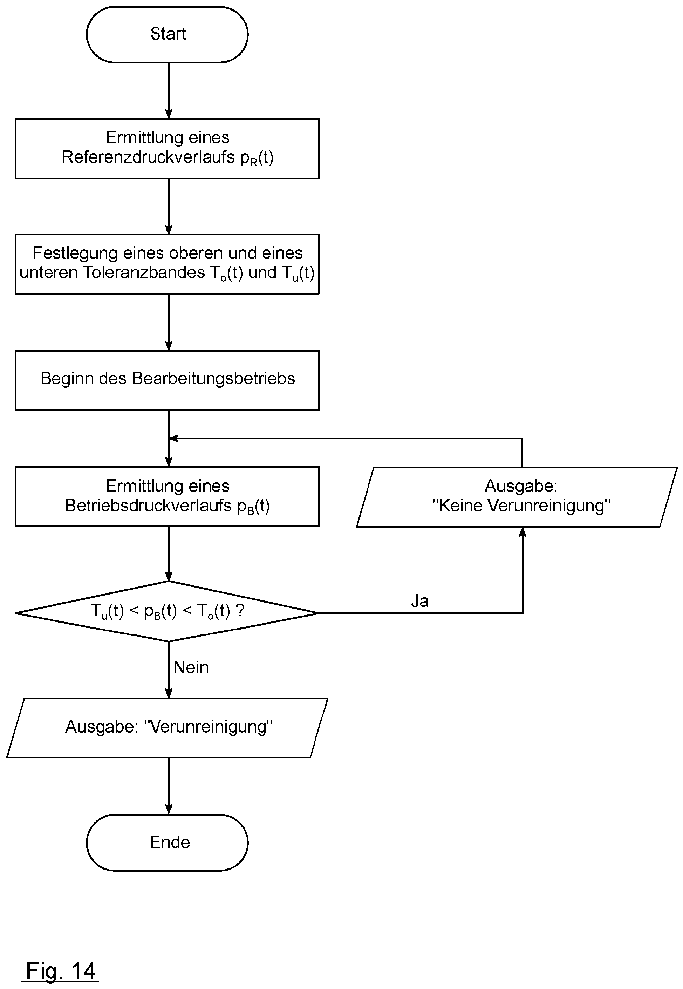

In Fig. 14 ist ein Flussdiagramm abgebildet, das eine bevorzugte Ausführungsform eines erfindungsgemäßen Verfahrens zur Identifikation von Verunreinigungen in der Filtereinheit einer Bearbeitungsmaschine mit einem Transportmittel visualisiert. Nach dem Start des Verfahrens wird zunächst im Bearbeitungsbereich der Bearbeitungsmaschine der zeitliche Verlauf eines Referenzdrucks (Referenzdruckverlauf) p_{R}(t) in einem Bereich eines Transportmittelgehäuses ermittelt. Während der Ermittlung des Referenzdruckverlaufs liegen keine Verunreinigungen in der Filtereinheit vor. Auf der Grundlage des Referenzdruckverlaufs wird im nächsten Schritt ein oberes Toleranzband Tₒ(t) und ein unteres Toleranzband Tᵤ(t) festgelegt. Im Anschluss beginnt der Bearbeitungsbetrieb der Bearbeitungsmaschine. Während des Bearbeitungsbetriebs wird über einen festgelegten Zeitraum der Betriebsdruckverlauf p_{B}(t) in einem Bereich eines Transportmittelgehäuses ermittelt. Nach Ablauf des festgelegten Zeitraums wird geprüft, ob der Betriebsdruckverlauf ausschließlich Werte annimmt, die größer als das untere, jedoch kleiner als das obere Toleranzband sind. Sofern dieses Kriterium erfüllt ist, wird mit einer Ausgabeeinheit die Information "Keine Verunreinigung" ausgegeben und es wird erneut über einen festgelegten Zeitraum der Betriebsdruckverlauf p_{B}(t) in einem Bereich eines Transportmittelgehäuses ermittelt. Wenn das Kriterium Tᵤ(t) < p_{B}(t) < Tₒ(t) jedoch nicht erfüllt ist, wird mit einer Ausgabeeinheit die Information "Verunreinigung" ausgegeben und das Verfahren endet sodann.

### Bezugszeichen

- 1: Transportmittel
- 2: Transportmittelglied
- 2a: Transportmittelglied A
- 2b: Transportmittelglied B
- 3: Gelenk
- 4: Strömungsleitelement
- 5: Umlenkachse
- 5a: Erste Umlenkachse
- 5b: Zweite Umlenkachse
- 6: Transportstruktur
- 7: Transportfläche
- 8: Laufrolle
- 9: Führungsrolle
- 11: Transportsystem
- 12: Transportmittelscheibe
- 14: Aussparung
- 15: Haupterstreckungsrichtung
- 16: Stellmagnet
- 17: Stellmagnetgelenk
- 18: Strömungsleitelement-Gelenk
- 19: Magnetischer Abschnitt
- 20: Arretierelement
- 21: Querschnitt
- B: Exemplarische Fluidelement-Bahnliniengruppe
- K: Bewegungsbahnkurve
- LS: Linke Seite
- N: Magnetischer Nordpol
- OS: Oberseite
- R: Teil einer Bewegungsbahnkurve
- RS: Rechte Seite
- S: Magnetischer Südpol
- US: Unterseite
- V: Vorzugsorientierung
- X: X-Koordinate eines kartesischen Koordinatensystems
- Y: Y-Koordinate eines kartesischen Koordinatensystems
- Z: Z-Koordinate eines kartesischen Koordinatensystems
- α: Winkel zwischen Bewegungsbahnkurve eines Strömungsleitelements und Vorzugsorientierung des Druckgradienten bzw. Fluidelement-Bahnlinine
- β: Winkel zwischen Haupterstreckungsrichtung und Bewegungsbahnkurve eines Strömungsleitelements

## Patentansprüche

1. Transportmittel mit Transportmittelgliedern (2) zum Transport von Werkstücken, das als Gliedertransportmittel ausgebildet ist, und das eine Laufrolle (8), die ausgebildet, um auf Laufflächen abzurollen, an einer linken Seite (LS) und an einer rechten Seite (RS) jedes der Transportmittelglieder (2) und eine Führungsrolle (9), die ausgebildet, um zumindest einseitig in Kontakt mit einer Führungsschiene zu treten, an einer Unterseite (US) jedes der Transportmittelglieder (2) umfasst, wobei das Transportmittel ausgebildet ist, eine Bewegung parallel zu einer Bewegungsbahnkurve (K) auszuführen, und wobei das Transportmittel eine Mehrzahl an Transportstrukturen (6) zum Transportieren von Werkstücken aufweist, wobei eine Transportstruktur (6) an einer Oberfläche jedes der Transportmittelglieder (2) mindestens eine Transportfläche (7) aufweist,
**wobei**
jedes der Transportmittelglieder (2) des Transportmittels an der linken Seite (LS) und an der rechten Seite (RS) mindestens ein Strömungsleitelement (4) enthält, das ausgebildet ist, ein Fluid in seiner direkten Umgebung zu beschleunigen, sobald es bewegt wird, und den aus der Beschleunigung resultierenden Bahnlinien der Fluidelemente im Wesentlichen eine Orientierung (V) aufzuprägen, wobei die Orientierung (V) einen kontinuierlich zusammenhängenden und begrenzten Bereich von Richtungen bezeichnet, wobei die Orientierung (V) gegenüber der Bewegungsrichtung des Strömungsleitelements einen Winkel (α) zwischen 10° und 90° einnimmt, und wobei
eine Haupterstreckungsrichtung (15) des mindestens einen Strömungsleitelements (4) gegenüber einer Tangente der Bewegungsbahnkurve (K) an demjenigen Punkt der Bewegungsbahnkurve (K), der dem mindestens einen Strömungsleitelement (4) am nächsten liegt, einen Winkel (β) zwischen 0° und 90° einnimmt.

2. Transportmittel nach der Anspruch 1,
**dadurch gekennzeichnet, dass**
die Orientierung (V) gegenüber der Bewegungsrichtung des Strömungsleitelements einen Winkel (α) zwischen 30° und 90° und bevorzugt zwischen 45° und 90° einnimmt.

3. Transportmittel nach einem der vorstehenden Ansprüche,
**dadurch gekennzeichnet, dass**
das Transportmittel als geschlossenes Transportmittel ausgebildet ist.

4. Transportmittel nach einem der vorstehenden Ansprüche,
**dadurch gekennzeichnet, dass**
das mindestens eine Strömungsleitelement (4) eine Form aufweist, die:
im Wesentlichen durch Parallelverschiebung eines ebenen Querschnitts gebildet wird, wobei die Parallelverschiebung senkrecht zur Ebene des Querschnitts erfolgt; oder
im Wesentlichen durch Verschiebung eines ebenen Querschnitts gebildet wird, wobei die Verschiebung entlang einer beliebigen Bahn erfolgen kann und wobei der Querschnitt im Verlauf der Verschiebung verändert werden kann.

5. Transportmittel nach Anspruch 4,
**dadurch gekennzeichnet, dass**
der Querschnitt des Strömungsleitelements (4) eine der Formen: Tragflächenform, bevorzugt mit einem abgerundeten und einem im Wesentlichen gegenüberliegenden spitzen Bereich; Rechteckform; Rautenform; Drachenviereckform; Trapezform; Schalenform; Ellipsenform; Kreissegmentform; Kreissektorform; Ringsegmentform; Ogivenform; aufweist,
wobei der ebene Querschnitt in die Haupterstreckungsrichtung bevorzugt eine größere Ausdehnung aufweist, als in einer zweiten, vorzugsweise senkrecht auf der Haupterstreckungsrichtung stehenden Richtung.

6. Transportmittel nach Anspruch 5,
**dadurch gekennzeichnet, dass**
die Haupterstreckungsrichtung des mindestens einen Strömungsleitelements (4) gegenüber der Tangente der Bewegungsbahnkurve (K) an demjenigen Punkt der Bewegungsbahnkurve (K), der dem mindestens einen Strömungsleitelement (4) am nächsten liegt, einen Winkel zwischen 10° und 80° und besonders bevorzugt zwischen 30° und 60° einnimmt.

7. Transportmittel nach einem der vorstehenden Ansprüche, ,
**dadurch gekennzeichnet, dass**
das mindestens eine Strömungsleitelement (4) vorzugsweise form-, kraft- oder stoffschlüssig an einer Transportstruktur (6) oder innerhalb einer Aussparung in der Transportstruktur (6) befestigt ist.

8. Transportmittel nach einem der vorstehenden Ansprüche,
**dadurch gekennzeichnet, dass**
das mindestens eine Strömungsleitelement (4) relativ zum Transportmittel drehbar gelagert ist.

9. Transportmittel nach Anspruch 8, weiter umfassend mindestens ein Arretierelement (20),
**dadurch gekennzeichnet, dass**
das mindestens eine Arretierelement (20) ausgebildet ist, das drehbar gelagerte Strömungsleitelement (4) in mindestens einer Orientierung festzustellen.

10. Transportmittel nach Anspruch 8 oder 9, weiter umfassend mindestens ein Federelement,
**dadurch gekennzeichnet, dass**
das drehbar gelagerte Strömungsleitelement (4) ausgebildet ist, abhängig von seiner Bewegungsgeschwindigkeit oder abhängig von der Strömungsgeschwindigkeit, mit der es angeströmt wird, verschiedene Orientierungen relativ zum Transportmittel einzunehmen.

11. Transportsystem, umfassend mindestens ein Transportmittel nach einem der Ansprüche 8 bis 10, sowie mindestens einen externen Aktor,
**dadurch gekennzeichnet, dass**
die Orientierung des mindestens einen Strömungsleitelements (4) durch den externen Aktor beeinflusst werden kann, wobei der externe Aktor vorzugsweise als Magnet, Druckluftdüse, Wärmequelle oder elektrische Spannungsquelle ausgebildet ist.

12. Transportsystem, aufweisend mindestens ein Transportmittel nach einem der Ansprüche 1 bis 10 und mindestens eine Transportmittelscheibe (12), wobei die mindestens eine Transportmittelscheibe (12) ausgebildet ist, das mindestens eine Transportmittel anzutreiben und/oder ausgebildet ist, von dem mindestens einen Transportmittel umschlungen zu werden,
**dadurch gekennzeichnet, dass**
die mindestens eine Transportmittelscheibe (12) mindestens eine Aussparung (14) aufweist, die ausgebildet ist, das mindestens eine Strömungsleitelement (4) während des Umschlingens und/oder Antreibens aufzunehmen.

13. Bearbeitungsmaschine zur Bearbeitung von bevorzugt plattenförmigen Werkstücken, die vorzugsweise zumindest abschnittsweise aus Holz, holzhaltigem Werkstoff, Verbundwerkstoff oder Kunststoff bestehen, aufweisend:
ein Transportmittel nach einem der Ansprüche 1 bis 10 und/oder ein Transportsystem nach einem der Ansprüche 11 oder 12; ein Transportmittelgehäuse, wobei das Transportmittel und/oder das Transportsystem in dem Transportmittelgehäuse angeordnet ist; eine Filtereinheit, die in fluidischer Verbindung mit dem Transportmittelgehäuse steht,
**dadurch gekennzeichnet, dass**
das Strömungsleitelement ausgebildet ist, in einem Bereich des Transportmittelgehäuses einen Überdruck zu erzeugen, sobald es bewegt wird.

14. Verfahren zur Identifikation von Verunreinigungen in der Filtereinheit einer Bearbeitungsmaschine nach Anspruch 13, wobei die Bearbeitungsmaschine weiterhin mindestens einen Messgrößensensor aufweist, der ausgebildet ist, eine Messgröße in bestimmten Bereichen des Transportmittelgehäuses zu erfassen, mit den Schritten:
1) Ermitteln eines Referenzmessgrößenverlaufs in einem Bereich des Transportmittelgehäuses;
2) Festlegen eines Toleranzbands;
3) Ermitteln eines Betriebsmessgrößenverlaufs in einem Bereich des Transportmittelgehäuses;
4) Vergleichen des Betriebsmessgrößenverlaufs und des Toleranzbands;

15. Verfahren zur Anpassung von Strömungseigenschaften eines Transportmittels einer Bearbeitungsmaschine nach Anspruch 13, wobei die Bearbeitungsmaschine weiterhin mindestens einen Messgrößensensor aufweist, der ausgebildet ist, eine Messgröße innerhalb des Transportmittelgehäuses zu messen, mit den Schritten:
1) Ermitteln der Messgröße;
2) Verändern der Orientierung des mindestens einen Strömungsleitelements auf der Grundlage der gemessenen Messgröße.

16. Verwendung eines Transportmittels nach einem der Ansprüche 1 bis 10 oder eines Transportsystems nach einem der Ansprüche 11 oder 12 zur Übertragung von Kräften, zum Transport von Werkstücken und/ oder zur spanenden Bearbeitung von Werkstücken.

## Claims

1. Transport means, which is configured as linked transport means, with transport means members (2) for transporting workpieces, and which comprises a roller (8), configured to roll on running surfaces, on a left side (LS) and on a right side (RS) of each of the transport means members (2), and a guide roller (9), configured to make contact with a guide rail at least on one side, on an underside (US) of each of the transport means members (2), wherein the transport means is configured to perform a movement parallel to a motion path curve (K), and wherein the transport means has a plurality of transport structures (6) for transporting workpieces, wherein a transport structure (6) has at least one transport surface (7) on a surface of each of the transport means members (2),
**wherein**
each of the transport means members (2) of the transport means contains, on the left side (LS) and on the right side (RS), at least one flow guide element (4), which is configured to accelerate a fluid in its immediate surroundings, as soon as it is moved, and to impose an orientation (V) on the path lines of the fluid elements essentially resulting from the acceleration,
wherein the orientation (V) denotes a continuously connected and limited range of directions, wherein the orientation (V), relative to the direction of movement of the flow guide element, assumes an angle (α) between 10° and 90°, and wherein
a principal extension direction (15) of the at least one flow guide element (4), relative to a tangent of the motion path curve (K) at that point of the motion path curve (K), which is closest to the at least one flow guide element (4), assumes an angle (β) between 0° and 90°.

2. The transport means according to claim 1,
**characterized in that**
the orientation (V), relative to the direction of movement of the flow guide element, assumes an angle (α) between 30° and 90° and preferably between 45° and 90°.

3. The transport means according to any one of the preceding claims,
**characterized in that**
the transport means is configured as a closed transport means.

4. The transport means according to any one of the preceding claims,
**characterized in that**
the at least one flow guide element (4) has a shape which:
is essentially formed by the parallel displacement of a planar cross-section, wherein the parallel displacement is perpendicular to the plane of the cross-section;
or
is essentially formed by the displacement of a planar cross-section, whereby the displacement can take place along any path and the cross-section can be changed during the displacement.

5. The transport means according to claim 4,
**characterized in that**
the cross-section of the flow guide element (4) has one of the following shapes: airfoil shape, preferably with a rounded and a substantially opposite pointed area; rectangular shape; rhombus shape; kite shape; trapezoidal shape; shell shape; elliptical shape; circular segment shape; circular sector shape; ring segment shape; ogive shape; wherein the planar cross-section preferably has a larger extent in the main extension direction than in a second direction, preferably perpendicular to the main extension direction.

6. The transport means according to claim 5,
**characterized in that**
the main extension direction of the at least one flow guide element (4), relative to the tangent of the motion path curve (K) at that point of the motion path curve (K) that is closest to the at least one flow guide element (4), assumes an angle between 10° and 80° and particularly preferably between 30° and 60°.

7. The transport means according to any one of the preceding claims,
**characterized in that**
the at least one flow guide element (4) is preferably by means of a form-fit, force-fit or material-fit connection attached to a transport structure (6) or within a recess in the transport structure (6).

8. The transport means according to any one of the preceding claims,
**characterized in that**
that at least one flow guide element (4) is rotatably mounted relative to the transport means.

9. The transport means according to claim 8, further comprising at least one locking element (20),
**characterized in that**
the at least one locking element (20) is configured to fix the rotatably mounted flow guide element (4) in at least one orientation.

10. The transport means according to claim 8 or 9, further comprising at least one spring element,
**characterized in that**
the rotatably mounted flow guide element (4) is configured, depending on its speed of movement, or depending on the flow velocity at which it is approached, to assume different orientations relative to the transport means.

11. Transport system, comprising at least a transport means according to any one of claims 8 to 10, and at least one external actuator,
**characterized in that**
the orientation of the at least one flow guide element (4) can be influenced by the external actuator, wherein the external actuator is preferably configured as a magnet, compressed air nozzle, heat source or electrical voltage source.

12. Transport system, having at least one transport means according to any one of claims 1 to 10 and at least one transport means disc (12), wherein the at least one transport means disc (12) is configured to drive the at least one transport means and/or is configured to be wrapped by the at least one transport means,
**characterized in that**
the at least one transport means disc (12) has at least one recess (14) which is configured to receive at least one flow guide element (4) during wrapping and/or driving.

13. Processing machine for processing preferably plate-shaped workpieces, which preferably consist at least partially of wood, wood-containing material, composite material or plastic, having:
a transport means according to any one of claims 1 to 10 and/or a transport system according to any one of claims 11 or 12; a transport means housing, wherein the transport means and/or the transport system is arranged in the transport means housing; a filter unit which is in fluidic communication with the transport means housing,
**characterized in that**
the flow guide element is configured to generate an overpressure in an area of the transport means housing as soon as it is moved.

14. Method for identifying contaminants in the filter unit of a processing machine according to claim 13, wherein the processing machine further has at least one measurement parameter sensor, configured to detect a measurement parameter in certain areas of the transport means housing, with the steps:
1) determining a reference measurement parameter profile in an area of the transport means housing;
2) establishing a tolerance band;
3) determining an operational measurement parameter profile in an area of the transport means housing;
4) comparing the operational measurement parameter profile and the tolerance band;

15. Method for adapting flow characteristics of a transport means of a processing machine according to claim 13, wherein the processing machine further has at least one measuring parameter sensor, configured to measure a measurement parameter within the transport means housing, with the steps:
1) determining the measurement parameter;
2) changing the orientation of at least one flow guide element based on the measurement parameter.

16. Use of a transport means according to any one of claims 1 to 10 or of a transport system according to any one of claims 11 or 12, for the transmission of forces, for the transport of workpieces and/or for the machining of workpieces.

## Revendications

1. Moyen de transport avec des éléments articulés (2) de moyen de transport pour le transport de pièces à traiter, qui est conçu sous la forme d'un moyen de transport à éléments articulés, et qui comprend un galet de roulement (8) qui est conçu afin de rouler sur des surfaces de roulement, sur un côté gauche (LS) et sur un côté droit (RS) de chacun des éléments articulés (2) de moyen de transport et un galet de guidage (9) qui est conçu afin d'entrer au moins unilatéralement en contact avec un rail de guidage, au niveau d'un côté inférieur (US) de chacun des éléments articulés (2) de moyen de transport,
dans lequel le moyen de transport est conçu afin d'exécuter un mouvement parallèle à une courbe de trajectoire de déplacement (K), et dans lequel le moyen de transport présente une pluralité de structures de transport (6) pour transporter des pièces à traiter,
dans lequel une structure de transport (6) présente au moins une surface de transport (7) au niveau d'une surface de chacun des éléments articulés (2) de moyen de transport,
**dans lequel** chacun des éléments articulés (2) du moyen de transport sur le côté gauche (LS) et sur le côté droit (RS) contient au moins un élément de guidage d'écoulement (4) qui est conçu afin d'accélérer un fluide dans son environnement direct dès qu'il est déplacé, et afin de marquer sensiblement une orientation (V) sur les lignes de trajectoire des éléments fluidiques résultant de l'accélération,,
dans lequel l'orientation (V) désigne une plage de directions cohérente en continu et limitée, dans lequel l'orientation (V) forme un angle (α) compris entre 10° et 90° par rapport à la direction de déplacement de l'élément de guidage d'écoulement, et
dans lequel une direction d'extension principale (15) dudit au moins un élément de guidage d'écoulement (4) forme un angle (β) compris entre 0° et 90° par rapport à une tangente de la courbe de trajectoire de mouvement (K) au point de la courbe de trajectoire de mouvement (K) qui correspond audit au moins un
élément de guidage d'écoulement (4) le plus proche.

2. Moyen de transport selon la revendication 1, **caractérisé en ce que**
l'orientation (V) par rapport à la direction de déplacement de l'élément de guidage d'écoulement, forme un angle (α) compris entre 30° et 90°, et de préférence compris entre 45° et 90°.

3. Moyen de transport selon l'une des revendications précédentes, **caractérisé en ce que**
le moyen de transport est conçu sous la forme d'un moyen de transport fermé.

4. Moyen de transport selon l'une des revendications précédentes, **caractérisé en ce que**
ledit au moins un élément de guidage d'écoulement (4) présente une forme qui :
est formée sensiblement par un déplacement parallèle d'une section transversale plane, dans lequel le déplacement parallèle est effectué perpendiculairement au plan de la section transversale ; ou
est formée sensiblement par déplacement d'une section transversale plane, dans lequel le déplacement peut être effectué le long d'une trajectoire quelconque et dans lequel la section transversale peut être modifiée au cours du déplacement.

5. Moyen de transport selon la revendication 4, **caractérisé en ce que**
la section transversale de l'élément de guidage d'écoulement (4) présente l'une des formes suivantes : forme d'aile, de préférence avec une zone arrondie et une zone pointue sensiblement opposée ; forme rectangulaire ; forme en losange ; forme de quadrilatère ; forme trapézoïdale ; forme de coquille ; forme elliptique ; forme de segment circulaire ; forme de secteur circulaire ; forme de segment annulaire ; forme d'ogive,
dans lequel la section transversale plane présente de préférence une plus grande extension dans la direction d'extension principale que dans une seconde direction, de préférence perpendiculaire à la direction d'extension principale.

6. Moyen de transport selon la revendication 5, **caractérisé en ce que**
la direction d'extension principale dudit au moins un élément de guidage d'écoulement (4) par rapport à la tangente de la courbe de trajectoire de mouvement (K) au point de la courbe de trajectoire de mouvement (K) qui est le plus proche dudit au moins un élément de guidage d'écoulement (4) forme un angle compris entre 10° et 80° et, de manière particulièrement préférée, compris entre 30° et 60°.

7. Moyen de transport selon l'une des revendications précédentes, **caractérisé en ce que**
ledit au moins un élément de guidage d'écoulement (4) est de préférence fixé par complémentarité de forme, par adhérence ou par liaison par matière à une structure de transport (6) ou à l'intérieur d'un évidement dans la structure de transport (6).

8. Moyen de transport selon l'une des revendications précédentes, **caractérisé en ce que**
ledit au moins un élément de guidage d'écoulement (4) est monté de manière rotative par rapport au moyen de transport.

9. Moyen de transport selon la revendication 8, comprenant en outre au moins un élément de blocage (20), **caractérisé en ce que**
ledit au moins un élément de blocage (20) est conçu de manière à fixer l'élément de guidage d'écoulement (4) logé de manière rotative dans au moins une orientation.

10. Moyen de transport selon la revendication 8 ou la revendication 9, comprenant en outre au moins un élément à ressort, **caractérisé en ce que** l'élément de guidage d'écoulement (4) monté de manière rotative est conçu pour occuper différentes orientations par rapport au moyen de transport en fonction de sa vitesse de déplacement ou en fonction de la vitesse d'écoulement à laquelle il est acheminé.

11. Système de transport, comprenant au moins un moyen de transport selon l'une des revendications 8 à 10, ainsi qu'au moins un actionneur externe, **caractérisé en ce que**
l'orientation dudit au moins un élément de guidage d'écoulement (4) peut être influencée par l'actionneur externe, dans lequel l'actionneur externe est de préférence conçu sous la forme d'un aimant, d'une buse d'air comprimé, d'une source de chaleur ou d'une source de tension électrique.

12. Système de transport, présentant au moins un moyen de transport selon l'une des revendications 1 à 10 et au moins un disque (12) de moyen de transport, dans lequel ledit au moins un disque (12) de moyen de transport est conçu afin d'entraîner ledit au moins un moyen de transport et/ou est conçu afin d'être enroulé par ledit au moins un moyen de transport, **caractérisé en ce que** ledit au moins un disque (12) de moyen de transport présente au moins un évidement (14) qui est conçu pour recevoir ledit au moins un élément de guidage d'écoulement (4) pendant l'enroulement et/ou l'entraînement.

13. Machine-outil pour le traitement de pièces à traiter de préférence en forme de plaques, qui sont de préférence constituées au moins partiellement de bois, de matériau contenant du bois, de matériau composite ou de matière plastique, présentant :
un moyen de transport selon l'une des revendications 1 à 10 et/ou un système de transport selon l'une des revendications 11 ou 12 ; un boîtier de moyen de transport, dans lequel le moyen de transport et/ou le système de transport est disposé dans le boîtier de moyen de transport ; une unité filtrante qui est en liaison fluidique avec le boîtier de moyen de transport, **caractérisée en ce que**
l'élément de guidage d'écoulement est conçu de manière à générer une surpression dans une zone du boîtier de moyen de transport dès qu'il est déplacé.

14. Procédé d'identification de contaminants dans l'unité filtrante d'une machine-outil selon la revendication 13, dans lequel la machine-outil comporte en outre au moins un capteur de grandeur de mesure qui est conçu pour détecter une grandeur de mesure dans certaines zones du boîtier de moyen de transport, comprenant les étapes suivantes :
1) déterminer une courbe de grandeur de mesure de référence dans une zone du boîtier de moyen de transport ;
2) définir une bande de tolérance ;
3) déterminer une courbe de grandeur de mesure de fonctionnement dans une zone du boîtier de moyen de transport ;
4) comparer la courbe de grandeur de mesure de fonctionnement et de la bande de tolérance .

15. Procédé d'adaptation de propriétés d'écoulement d'un moyen de transport d'une machine-outil selon la revendication 13, dans lequel la machine-outil comporte en outre au moins un capteur de grandeur de mesure qui est conçu pour mesurer une grandeur de mesure à l'intérieur du boîtier de moyen de transport, comprenant les étapes suivantes :
1) déterminer la grandeur de mesure ;
2) modifier l'orientation dudit au moins un élément de guidage d'écoulement sur la base de la grandeur de mesure mesurée.

16. Utilisation d'un moyen de transport selon l'une des revendications 1 à 10 ou d'un système de transport selon l'une des revendications 11 ou 12 pour la transmission de forces, pour le transport de pièces à traiter et/ou pour le traitage par enlèvement de copeaux de pièces à traiter.
